# EUROPEAN PATENT SPECIFICATION

(11) **EP 0 903 084 B1**
(45) Date of publication and mention of the grant of the patent: **20.12.2006**
(21) Application number: 98305802.5
(22) Date of filing: 21.07.1998
(51) Int. Cl.: A23L 1/01, A47J 37/12, A23P 1/08, A23L 1/325, A23L 1/00

(54) **Process and apparatus for making battered and fried food products having an embossed surface, and product obtained**
Verfahren und Vorrichtung zur Herstellung von beschichteten und frittierten Nahrungsmitteln mit Oberflächenstruktur, und damit hergestelltes Produkt
Procédé et installation de fabrication de produits alimentaires enrobés et frits a surface structurée, et produit obtenu

(30) Priority: 22.07.1997 GB 9715491
(43) Date of publication of application: 24.03.1999
(73) Proprietor: Youngs Bluecrest Seafood Limited, Grimsby DN32 8HO (GB)
(72) Inventor: Selwyn-Smith, Jerome Selwyn, Wokingham, Berks RG41 1HW (GB); Stone, Ashley Peter, Ruislip Manor, Middlesex HA4 0DL (GB); Croy, John Sewell, Cleethorpes, N.E .Lincolnshire DN35 0HF (GB)
(74) Representative: Stallard, Gillian Kathleen

(56) References cited:
- WO-A-95/15699
- US-A- 3 132 949
- US-A- 4 187 771
- US-A- 4 308 286
- US-A- 4 386 559
- US-A- 4 744 994
- DATABASE WPI Section PQ, Week 199644 Derwent Publications Ltd., London, GB; Class P28, AN 1996-437111 XP002241401 -& JP 08 215070 A (MANYO SHOKUHIN KK), 27 August 1996 (1996-08-27)

## Description

The invention relates to the preparation of coated food products, and especially to the preparation of food products which are coated in batter and then fried.

In the commercial preparation of batter-coated food products for sale as a chilled or frozen product to consumers for them to carry out a final cooking step, the food products, coated in batter, generally undergo a brief frying step to set at least the outer layer of the batter coating before chilling or freezing and packaging. In such a frying step, the batter-coated food products are introduced into one end of a continuos deep-fat fryer containing a frying medium, usually oil. The fryer is usually provided with a conveyor, often called a "submerger conveyor", that has its lower run just below the surface of the oil, and a further conveyor, often called a "base conveyor" or a "receiving conveyor", which runs near the base of the fryer. When the food products first enter the fryer, they fall to the bottom towards the base conveyor, but after a short while they tend to rise to the surface under their own buoyancy. They the come into contact with the submerger conveyor, which keeps the food products submerged in the oil while assisting them in their passage through the fryer.

The present invention provides a process for preparing batter-coated food products, which comprises coating a food product in a batter containing leavening agent, introducing the coated food product into a fryer containing a frying medium, allowing the uppermost surface of the coated food product to come into contact with an embossing surface of the submerger conveyor means, the embossing surface being so transported by the submerger conveyor means as to keep a food product in contact with it submerged in the frying medium, and the embossing surface having a pattern of recesses in it, the coating material of the food product expanding into the recesses of the embossing surface and the food product remaining in contact with and stationary relative to the embossing surface at least until the outermost surface of the coating has set sufficiently for the coating to retain an embossed pattern on removal from the embossing surface, and then allowing the coated food product to leave, or effecting removal of the coated food product from, the embossing surface.

The invention also provides apparatus for imparting an embossed pattern to food products coated in a batter containing leavening agent, which comprises a fryer having submerger conveyor means provided with an embossing surface, the submerger conveyor means being arranged, in use, so to transport the embossing surface as to keep a food product with its uppermost surface in contact with the embossing surface submerged in frying medium in the fryer, the embossing surface having a pattern of recesses in it into which coating material on a food product in contact with the embossing surface can expand , and the arrangement being such that, in use, a food product can remain in contact with and stationary relative to the embossing surface at least until the outermost surface of the coating has set sufficiently for the coating to retain an embossed pattern on removal from the embossing surface.

The resultant batter-coated food product has an embossed pattern on the surface that has been in contact with the embossing surface, that surface of the food product being the uppermost surface of the food product while in contact with the embossing surface and generally being the upper surface of the final product. The embossed pattern can enhance the appearance of the product. Furthermore, when given a final cooking step in an oven by a consumer, the enlarged upper surface area of the food product created by the embossed pattern can lead to greater moisture removal at that stage and a crisper coating with enhanced eating qualities.

In previous proposals, care has been taken to avoid distortions created by the submerger conveyor on the batter coating of food products as they are fried. In WO95/15699, for example, it is suggested that food products coated in a mechanically-aerated material are inverted on entry to the fryer in order to avoid distortions caused by contact between the submerger conveyor, or "transfer grid", and the surfaces of the food products intended to be the upper surfaces of the final product.

In a further proposal discussed in GB 2 091 532, tempura-style products have ridges imparted to their bottom surfaces by the receiving conveyor, but the specification maintains that if the coating of those products contains more than "about 0.5% baking powder", the leavening action is such that it causes expansion of the crust with a corresponding loss of the marks imparted by the receiving conveyor. That specification directs the use of a mechanically-aerated batter as the coating material and the incorporation of shortening in various forms to produce surface textures of either a bumpy or laminated nature.

US 4 386 559 discloses an apparatus and method for preparing a batter-coated product having a ridged batter topography.

The apparatus has an infeed conveyor belt with support elements having a defined size and spacing to support a batter-coated comestible in the hot cooking oil while batter begins to droop from the comestible and is irreversibly heat-set in a desired ridged topography.

In the process and apparatus of the invention, an embossed pattern is imparted to the coating by allowing expansion of the coating material into the recesses in the embossing surface of the submerger conveyor means under the action of the leavening agent in the coating and the release of steam during frying. The food product is held against the conveyor means by its own buoyancy and is carried along by it, remaining stationary relative to the embossing surface for a period sufficient to allow at least the outermost surface of the coating to set, or a skin to form, to an extent such that an embossed pattern is retained after the food product leaves the embossing surface.

It is important to ensure that setting of, or the formation of a skin on, at least the part of the surface of the coating to be embossed does not begin to any significant extent after the coated food products enter the frying medium and before they come into contact with the embossing surface of the submerger conveyor means. The period during which the surface of a coated food product that is to be embossed (generally the uppermost surface of the food product as it enters the fryer) is submerged in the frying medium before it contacts the embossing surface is referred to herein as the "pre-embossing residence time". The maximum acceptable pre-embossing residence time at which setting of the coating is not too great for subsequent successful embossing depends on the temperature of the frying medium. For frying temperatures within the range of from 190 to 230°C, the pre-embossing residence time is advantageously within the range of from 1.5 to 4 seconds, and is preferably within the range of from 2 to 3 seconds.

For a given frying temperature, the pre-embossing residence time can be adjusted by varying the length of the path taken by the food products after entering the frying medium and before reaching the embossing surface. Because the food products tend to fall towards the base of the fryer before rising into contact with the embossing surface under their own buoyancy, that path length can be adjusted by suitably selecting the depth of the frying medium in the fryer. An in-feed conveyor arranged to travel at least partly below the level of the frying medium may be provided to transport the food products from their entry into the fryer to below the submerger conveyor means. The pre-embossing residence time may then be varied by adjusting the position of the in-feed conveyor relative to the level of the frying medium, and especially by raising or lowering the end of the in-feed conveyor nearest to the entry of the food products into the fryer to adjust the angle of inclination of the in-feed conveyor to the surface level of the frying medium. Such an adjustment is especially useful for varying the pre-embossing residence time if, at least when the in-feed conveyor is at its steepest inclination to the level of the frying medium, a food product initially deposited on the in-feed conveyor has its uppermost surface above the level of the frying medium, and is gradually submerged in the frying medium as it is transported by the in-feed conveyor. Adjustment of the pre-embossing residence time can also be effected by varying the rate of travel of the in-feed conveyor, but such a method of adjustment is not generally preferred when the process is being carried out on a commercial scale because such an adjustment leads to a variation in throughput.

Advantageously, the interiors of substantially all of the recesses in the embossing surface are in communication with the exterior to allow the escape of steam and/or other gases from the recesses when a food product is in contact with surrounding portions of the embossing surface during frying. Steam and/or other gases emitted from a food product during frying might otherwise prevent the batter from expanding fully into the recesses, and might act as a cushion with the result that the product might be free to move relative to the embossing surface and even to be driven prematurely away from that surface. Such an arrangement can also allow the frying medium to enter the recesses to promote setting of the batter coating in the embossed pattern.

The embossing surface of the submerger conveyor means is advantageously provided by a flexible belt and, advantageously, at least some of the recesses, preferably, substantially all the recesses, penetrate the belt and are directly open to the exterior to allow the escape of water vapour and or other gases, and the ingress of the frying medium, during frying. The flexible belt preferably comprises a series of slats, each of which extends transversely to the direction of travel of the belt, the slats being provided with the recesses and providing the embossing surface. In such an arrangement, the slats are advantageously arranged adjacent to, but spaced apart from each other and, preferably, at least some of the recesses extend over at least two slats so that gaps between adjacent slats provide vents for the escape of steam or other gases from the interior of the recesses to the exterior instead of, or preferably in addition to, those recesses penetrating the slats and being directly open to the exterior. Adjoining slats are advantageously spaced apart by a distance of 3mm or less, and preferably, 1 to 2mm. It has been found that, with spacing between the slats of 3mm or less, significant expansion of the batter coating into the gaps during frying can be avoided.

The shapes of the recesses with which the embossing surface is provided and the spacing between the recesses will depend on the pattern required to be embossed on the batter-coating and can be any arrangement that gives a three-dimensional embossed pattern to the batter-coating of the food product. Assuming the area of the embossing surface not occupied by the recesses is all in the same plane, then the ratio of the area occupied by the recesses in that plane (excluding the area of any gaps between slats as discussed above) to the non-recessed area is advantageously within the range of from 0.40 to 3.0, preferably, 1.20 to 1.85. When the embossing surface is viewed in plan, the recesses may be of similar or different shapes from each other. For example, at least some of the recesses may be elongate with rounded ends, and the centre lines of the recesses may be arranged to extend at different angles to the direction of travel of the embossing surface. The width of each of the recesses is advantageously at least 4mm, and may be up to 40mm. Preferably, however, the width of each recess is within the range of from 6 to 15mm, and may be, for example, 10 or 11mm. The depth of each recess is advantageously within the range of from 5 to 25mm, preferably, 9 to 15mm. Each recess may have walls that extend in a substantially perpendicular direction to the surrounding unrecessed portions of the embossing surface. It may, however, be found advantageous for the walls of each recess to be inclined to a relatively small extent to that perpendicular direction so that each recess tapers in a direction away from the surrounding unrecessed portions of the embossing surface in order to facilitate release of the food product from the embossing surface when desired. Accordingly, the walls of each recess may be inclined to the perpendicular to the surrounding unrecessed portions of the embossing surface by an angle within the range of from 2.5° to 10°, and preferably, approximately 5°, to provide the said taper. Advantageously, the edges between the walls of the recesses and unrecessed portions of the embossing surface are bevelled.

The embossing surface is advantageously a release surface of a suitable "non-stick" material capable of withstanding frying temperatures, and is preferably of polytetrafluoroethylcne (PTFE), to promote removal of the products from the embossing surface when desired.

The extent of the expansion of the coating into the recesses depends at least in part on the proportion of leavening agent present in the coating material. That proportion should be selected in order to achieve satisfactory expansion into the recesses during frying, but should not be such as to cause excessive release of leavening gases, which might lead to rupture of the coating or to the food product being driven away from the embossing surface prematurely. The proportion of leavening agent for any particular batter recipe can be readily determined in practice. Advantageously, however, the amount of leavening agent in the coating material is within the range of from 1.7 to 6.0%, preferably, 2.8 to 4.8%, the percentages being by weight based on the weight of the dry ingredients (the expression "dry ingredients" being used herein to exclude added water but not to exclude the moisture content of other ingredients).

The leavening agent may comprise any substance or substances which when introduced into the batter and then placed in hot oil will react to release gas, usually carbon dioxide. Advantageously, however, the leavening agent comprises at least one basic component, for example, sodium bicarbonate, and at least one acidic component. Especially suitable as the at least one acidic component is sodium acid pyrophosphate (SAPP) which may be used with or without monocalcium phosphate (MCP). In a preferred embodiment of the invention, the leavening agent comprises sodium bicarbonate, and an acidic component comprising SAPP with or without MCP, and the amount of sodium bicarbonate in the coating material is within the range of from 0.75 to 2.5%, preferably, 1.2 to 2.0%, and the amount of the acidic component is within the range of from 0.95 to 3.5%, preferably, 1.6 to 2.8%, the percentages being by weight based on the weight of the dry ingredients. When SAPP and MCP are used together, then the proportion of SAPP is advantageously within the range of from 80 to 90% by weight based on the total weight of SAPP and MCP.

It is also possible to control the degree of expansion of the coating by adjusting the level of the frying medium in the fryer because the coating will not generally expand above the level of the frying medium. Advantageously, the level of the frying medium in the fryer relative to the submerger conveyor means is such that the surface of the frying medium is immediately above the uppermost part of the recesses of the embossing surface on the portion of the path of the submerger conveyor means on which the food product is in contact with the embossing surface (that portion generally being at least a part of the lower run of the submerger conveyor means). With an arrangement in which the embossing surface is provided by a flexible belt and the recesses penetrate the belt and are directly open to the exterior, as discussed above, excessive expansion of the coating, which might occur if the level of the frying medium is considerably above the recesses and the proportion of leavening agent in the coating material is relatively high, might cause the coating material to seep through the recesses and cause difficulties in the removal of the food products from the submerger conveyor means at the end of the desired period. On the other hand, too low a level of frying medium in the fryer might restrict the potential for expansion of the batter coating and adversely affect the ability of the food products to stay in contact with the embossing surface under their own buoyancy.

The path length of the food product through the frying medium, and the path length of the submerger conveyor means, is determined for a given frying temperature and batter composition by the time taken for the desired degree of cooking of the food product and/or setting of the coating to be achieved. Although the food product may be transported by the embossing surface along substantially the entire length of the path of the food product through the frying medium, it has been found that sufficient setting of the coating of a food product to retain its embossed pattern on leaving the embossing surface can be obtained after the food product has travelled only a portion of that path. Advantageously, therefore, the food product is conveyed in contact with the embossing surface along only a portion of the path of the submerger conveyor means through the frying medium, and the food product is free of that surface for the remainder of its passage through the fryer. As a result of close contact with the embossing surface and the consequent exclusion of the frying medium from some portions of its surface, some areas of the coating of the food product may have been shielded from the frying medium and not cooked to the same extent as others. Such shielded areas may not be so well set as other more exposed areas of surface, and, even if sufficiently set, may well be paler in colour than more exposed areas. With an arrangement in which the food product is free of the embossing surface for the final part of its passage through the fryer, setting and/or cooking of those shielded areas to the desired extent can take place, and a more uniform setting and/or cooking of the outermost surface of the coating over the entire food product can be achieved with greater uniformity of colour over the embossed surface of the food product.

Accordingly, therefore, the submerger conveyor means may comprise a first conveyor (the "embossing conveyor") having the embossing surface, and a second conveyor (the "frying-out conveyor") for maintaining a food product submerged in the frying medium after it has left the embossing surface and assisting it to travel the remainder of its path through the fryer. The frying-out conveyor is preferably provided with a wire belt for contacting the food products as is commonly used for the belt of conventional submerger conveyors.

The proportion of the length of the path of the submerger conveyor means during which the food product should be in contact with the embossing conveyor and the proportion during which it should be free of the embossing surface and in contact with the frying-out conveyor, when provided, can readily be determined in any particular circumstances. Advantageously, however, the food product is in contact with the embossing surface on the embossing conveyor for a time (the embossing residence time) within the range of from 10 to 50 seconds, preferably, 15 to 30 seconds, which will generally be a time sufficient to set the coating in the embossed pattern. The embossing residence time will, however, depend on the exact composition of the batter-coating and temperature of the frying medium, and also on the desired appearance required of the embossed surface of the food product. The degree of embossing on the coating when the food product leaves the embossing surface (that is to say, the extent to which the batter-coating has expanded into the recesses) for a given batter-coating composition and frying temperature can be varied by adjusting the embossing residence time. That time should generally be long enough to ensure that the coating is sufficiently set through thermally-induced ingredient interactions at the end of the time to retain the embossed pattern. Subsequent further expansion ofthe batter after the food product has left the embossing surface to an extent that might materially decrease the degree of embossing already achieved or even cause complete loss of the pattern should generally be avoided, but a relatively small amount of further expansion without any substantial loss in definition of the embossed pattern, especially in those areas that were shielded from the frying medium by the embossing surface, may be acceptable, or even desired, depending on the final appearance required.

When the submmerger means comprises a frying-out conveyor, the food product is advantageously in contact with the frying-out conveyor for a period (the frying-out time) within the range of from 10 to 50 seconds, preferably, 15 to 30 seconds. The total frying time (that is to say, the pre-embossing residence time + the embossing residence time + the frying-out time) is advantageously within the range of from 21.5 to 104 seconds, preferably, 32 to 63 seconds, but it will depend on the nature of the coating material and especially on the frying temperature. In general, with a given batter composition, frying temperature and total frying time, and assuming an embossing residence time long enough to ensure sufficient setting of the coating in the embossed pattern, then increasing the embossing residence time at the expense of the frying-out time will increase the definition of the embossed pattern on the food product and also the colour differential of the embossed surface of the final food product, whereas increasing the frying-out time at the expense of the embossing residence time will increase the colour uniformity of the embossed surface of the food product but decrease the degree of embossing.

The frying-out conveyor preferably runs at the same rate as the embossing conveyor. It has been found advantageous to arrange for the lower run of the frying-out conveyor to be at a higher level than the embossing surface as it reaches the end of its lower run in order to promote smooth transition of the food products from the embossing conveyor to the frying-out conveyor.

The frying temperature is advantageously within the range of from 190 to 230°C, preferably, 200 to 210°C.

When applying a batter coating to food products it is usual to employ either a three-coat or a five-coat system. A three-coat system comprises applying an initial layer of a relatively thin batter, often referred to as "an adhesion layer". An intermediate layer of crumbs is then applied and, finally, a top coat of batter. The five-coat system involves a fine wash and a pre-dust prior to applying an adhesion layer of batter, a crumb layer and a top coat of batter as in the three-coat system. In the process of the invention, when using a three-coat system, the coating of leavened batter is applied to the food product as the top coat

The thickness of the layer of leavened batter applied to the surface of the food product to be embossed in the process of the invention may have to be greater than the thickness of the layer of top coat applied in conventional processes in order to achieve a satisfactory embossed pattern. The thickness of coating material enrobing a food product is measured in terms of the "yield" of the food product defined as the weight of the coated food product divided by the weight of the uncoated food product and expressed as a percentage. In a three-coat system as described above, the yield of the food product after application of the adhesion layer is advantageously within the range of from 103 to 115%, preferably, 105 to 109%, the yield of the food product after the application of the crumb layer is advantageously within the range of from 117 to 135%, preferably, 120 to 128%, and the yield of the food product after the application of the final top coat of batter containing a leavening agent and before frying is advantageously within the range of from 160 to 180%, preferably, 163 to 175%. The yield of the food product usually decreases slightly after frying owing to a loss of water during frying partially compensated for by an uptake of oil.

The yield depends on the viscosity of the coating material, and, for a given viscosity, can be adjusted using blowers or jets of air directed at the coated food products to blow the coating material off the substrate. Alternatively, or in addition, the viscosity of the coating material can be varied by adjusting its water content. It has, however, been found that a coating material of batter containing a leavening agent having too low a viscosity results in a set structure that is too weak to prevent expanding gas cells from being retained within the coat on frying. Thus, the potential for coat expansion as a whole is smaller as is also the ability of the coating material to fill the recesses in the embossing surface. Too high a viscosity, on the other hand, would result in a set structure that is too strong and while able to retain its gas cells would restrict their expansion so that top coat expansion as a whole would also be reduced. Suitable viscosities for the coating material can be readily determined in practice.

If the layer of top coat is thicker in the process of the invention than in conventional processes, then in order to keep the final yield the same as in the conventional processes, the thickness of the adhesion layer may be reduced. That can be achieved by reducing the viscosity of the adhesion batter and/or using blowers or air jets to reduce the thickness of the layer on the food product. A reduction in the viscosity of the adhesion batter for a given thickness also generally leads to a reduction in the quantity of crumb adhering to the coating at the crumbing stage.

The coated food products may be fish or chicken. In the case of food products made of fish, the food products may be regularly-shaped pieces of, for example, trapezoidal shape, or they may natural fillets or of fillet-like shape. If the food products have a surface recognised as an upper surface by a consumer, as in the case of fish fillets, then those upper surfaces are advantageously the surfaces to which the embossed pattern is imparted.

The invention also provides a batter-coated food product having an embossed pattern on its uppermost surface obtainable by the process or with the apparatus of the invention.

A process and apparatus for preparing coated food products in accordance with the invention will now be described, by way of example, with reference to the accompanying drawings, in which:
Fig. 1 is a diagrammatic longitudinal section through a conventional fryer not in accordance with the invention;
Fig. 2 is a diagrammatic longitudinal section through a fryer constructed in accordance with the invention;
Fig. 3 shows diagrammatically a portion of the apparatus of Fig. 2 on a larger scale than Fig. 2;
Fig. 4 shows diagrammatically a further portion of the apparatus of Fig. 2 on a larger scale than Figs. 2 and 3;
Fig. 5 is a diagrammatic isometric view (not to scale) of a slat, a series of which provide an embossing surface for the apparatus of Fig. 2;
Fig. 6 shows a plan of an embossing surface composed of a series of slats similar to that shown in Fig. 5; and
Figs. 7 and 8 are diagrammatic cross-sections through two slats similar to those shown in Figs. 5 and 6 but on a larger scale and illustrating different degrees of expansions of batter-coating into recesses in those slats.

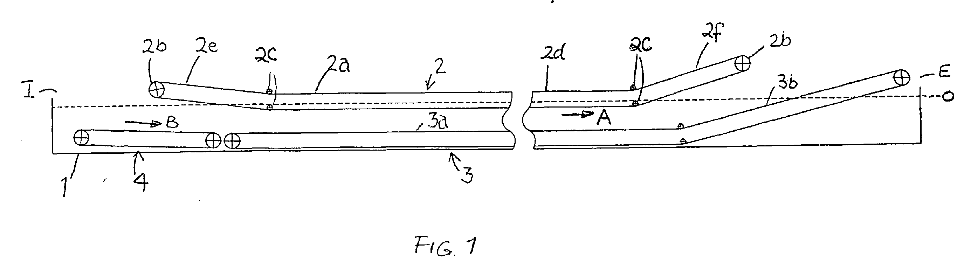

Referring to the accompanying drawings, and initially to Fig. 1, a conventional fryer for partial frying of a batter-coated food product before chilling or freezing and packaging, comprises a vessel 1 containing oil as the frying medium, the surface of the oil being indicated by the broken line O. The fryer has an product inlet I and a product exit E. A submerger conveyor, indicated generally by the reference numeral 2 having a conventional wire conveyor belt 2a travelling around driven rollers 2b and guide rollers 2c has a main flat portion 2d, and inclined inlet and exit portions 2e and 2f, respectively. The conveyor belt 2a is arranged to travel on the lower run of the main portion 2d in the direction indicated by the arrow A submerged beneath the surface O of the oil in the fryer 1. A base conveyor, indicated generally by the reference numeral 3 has a flat portion 3a along the base of the vessel 1, the upper run of which is arranged to travel in the direction of the arrow A, and an inclined portion 3b towards the exit E of the fryer. An in-feed conveyor 4 is positioned beneath the oil surface O near the product inlet end I of the fryer and is inclined downwardly towards the base of the vessel 1, extending under the submerger conveyor 2. The upper run of the in-feed conveyor 4 is arranged to travel in the direction indicated by the arrow B.

In operation, food products coated in a conventional batter are introduced into the hot oil in the fryer 1 at the inlet end I where they sink onto the in-feed conveyor 4 which carries them beneath the submerger conveyor 2. Increasing buoyancy of the food products due to the release of steam and/or other leavening gases (depending on the composition of the batter) caused by immersion in the hot oil causes them to rise into contact with the wire belt 2a on the lower run of the submerger conveyor 2. Then, assisted by the submerger conveyor 2, they travel along the fryer 1 towards the product exit E, being maintained below the surface of the oil O by the submerger conveyor. The upwardly inclined portion 3b of the base conveyor 3 assists in the removal of the coated food products from the oil at the exit end. The oil temperature is chosen together with the rate of travel of the conveyors and path length through the fryer so that with any given coated food product the desired degree of frying of the food product has been carried out when the food product reaches the exit E of the fryer 1.

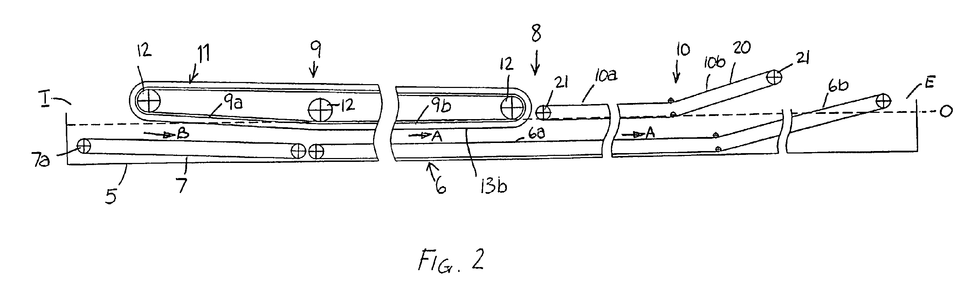

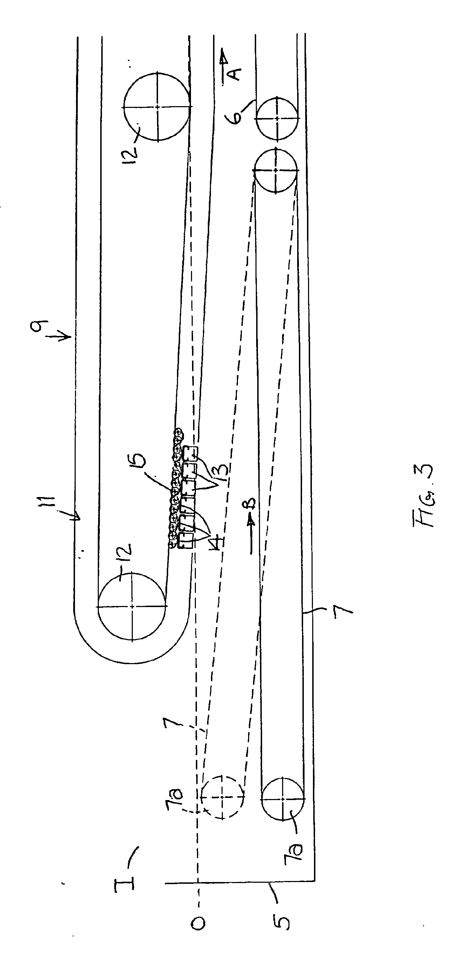

Referring now to Fig. 2, a fryer constructed in accordance with the invention for carrying out the process of the invention comprises a vessel 5 containing oil as the frying medium, the surface of the oil being indicated by the broken line O as in Fig. 1. The fryer 5 has a product inlet I and a product exit E as in the fryer of Fig. 1 It also has a base conveyor, indicated generally by the reference numeral 6, similar to the base conveyor 3 of Fig. 1, having a flat portion 6a along the base of the vessel 5, the upper run of which is arranged to travel in the direction of the arrow A, and an inclined portion 6b towards the exit E of the fryer. An in-feed conveyor 7 is also positioned below the oil surface O near the product inlet I, its front roller 7a being so mounted as to be adjustable in height to vary the angle of inclination of the conveyor 7 to the horizontal as shown in Fig. 3 between that of the position shown in solid lines and that of the position shown in broken lines. The upper run of the in-feed conveyor 7 is arranged to travel in the sense indicated by the arrow B.

Unlike the fryer 1, the fryer 5 is provided with submerger conveyor means, indicated generally by the reference numeral 8, which is composed of two individual conveyors, an embossing conveyor indicated generally by the reference numeral 9, and a frying-out conveyor indicated generally by the reference numeral 10.

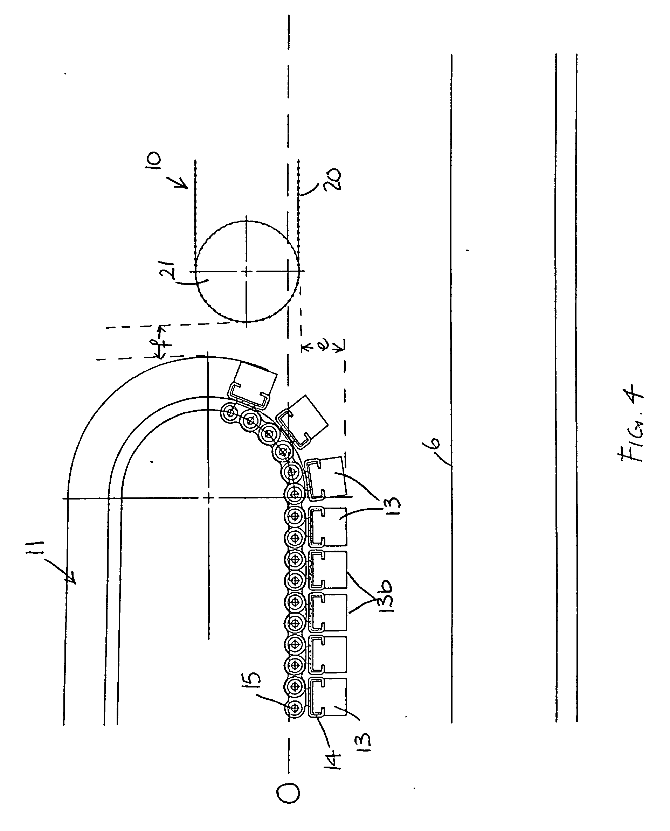

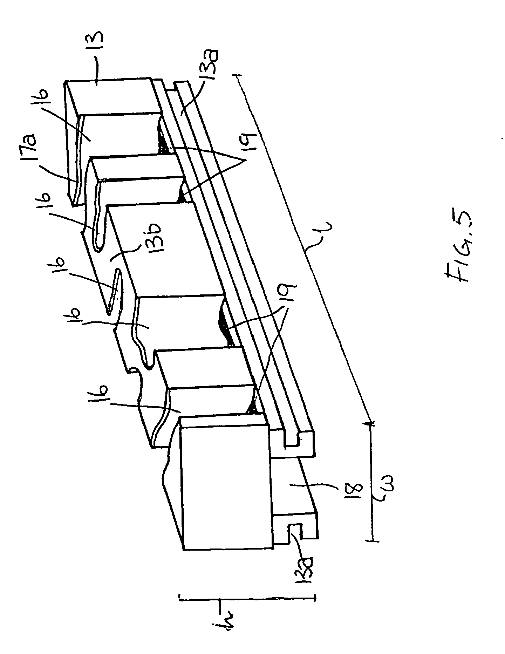

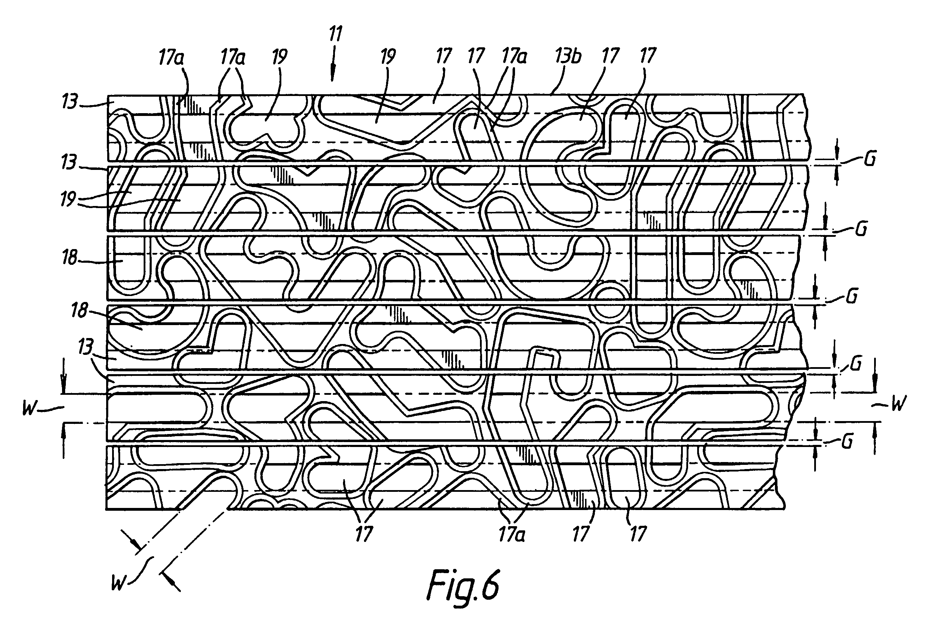

The embossing conveyor 9 comprises a flexible belt, indicated generally by the reference numeral 11, arranged to run on three rollers 12 with its lower run having a gently inclined portion 9a travelling from just above the oil level O to below it, and a flat portion 9b extending immediately below the level of the oil O and travelling in the direction of the arrow A. The flexible belt 11 (see Figs. 3 and 4) is composed of a series of slats 13 arranged adjacent to, but spaced apart from, each other. The slats 13 are held in channel-shaped metal carriers 14, which engage in grooves 13a extending longitudinally down each side of each slat, and the carriers are mounted on chains 15 so that the slats can flex relative to each other. The slats 13 are arranged parallel to each other and transversely to the direction of travel of the belt, gaps G (see Fig. 6) between adjacent slats being of a width of 2mm or less. Outwardly facing surfaces of the slats 13 together form an embossing surface 13b. The slats 13 are made of a suitable "non-stick" material, for example, PTFE, so that the embossing surface 13b has "non-stick" characteristics. As can be seen in Figs. 5 and 6, each slat 13 has recessed portions 16, the recessed portions of adjacent slats being so arranged that, when the slats are arranged adjacent to each other to form the flexible belt as shown in Fig. 6, the recessed portions of the slats co-operate with each other to form recesses 17 most of which extend across at least one gap G between adjacent slats. The edges 17a of the recesses 17 are bevelled. The recesses 17 when viewed in plan as in Fig. 6 are of differing shapes, but are generally of elongated shape with rounded ends, being formed with the same cutting tool. The walls of the recesses 17 may extend in a perpendicular direction to the unrecessed portions of the embossing surface 13b as shown in Fig. 5, or they may be inclined slightly to that perpendicular by, for example, 5°, so that each recess tapers slightly in a direction away from the unrecessed portions of the embossing surface.

Each slat 13 is also formed with a longitudinally extending channel 18 in its back, and most of the recesses 17 are cut sufficiently deeply into the slats 13 that they penetrate through the slats into the bases of the channels 18 providing openings 19 (shown shaded in black in Fig. 5 for clarity) in the slats through which gas can escape and oil can enter. The carriers 14 have open ends and are formed with round apertures (not shown) in their bases. Thus, the interior of the recesses 17 in the slats 13 are directly in communciation with the exterior through the channels 18, as well as being in communication with the exterior through the gaps G between the slats 13. In addition, small ports (not shown) can be drilled through the slats 13 in relatively large unrecessed areas of the surface 13b so as to allow gases to escape from those areas.

As an example of suitable dimensions, the slats 13 may each be of a width *w* of 23mm, a length *l* of 810mm and have a thickness *h* of 23mm (see Fig. 5). The recesses 17 may generally be of a width W (see Fig. 6) of 10 to 11mm (measured transversely to the centre line of the recess), that being the width of the cutting tool used to carve the recesses in the slats. The depth of each recess 17 (measured from the base of the channel 18 to the outer surface 13b of the slat 13) may be 10mm. The width of each of the bevelled edges of the recesses 17 may be 2mm with the bevelled surface being inclined at an angle of 45° to the unrecessed portions of the embossing surface 13b. Assuming the area of the embossing surface 13b not occupied by the recesses 17 is all in the same plane, then the ratio of the area occupied by the recesses 17 in that plane (excluding the area of any gaps G between the slats 13) to the non-recessed area may be 1.24.

The frying-out conveyor 10 (see Fig. 4) comprises a wire belt 20 arranged to run on rollers 21 and having a flat portion 10a extending below the level of the oil O and travelling in the direction of the arrow A and an inclined portion 10b extending upwardly out of the oil towards the exit end E. The axis of the roller 21 at the front end of the frying-out conveyor 10 adjacent to the embossing conveyor 9 is so positioned that the lower run of the belt 20 is in a higher horizontal plane than the embossing surface 13b of the embossing conveyor 9 as it reaches the end of its lower run as shown in Fig. 4, the separation e being, for example, between 25 and 35mm. The minimum separation *f* between the surface 13b and the belt 20 as they travel upwards is, for example, between 10 and 20mm.

In operation, food products are coated in batter, for example, using a three-coat system comprising an initial adhesion layer of batter, a layer of crumbs and a top coat of batter containing leavening agent in the proportion within the range of from 2.8 to 4.8% by weight based on the weight of the dry ingredients. Before application to the food product, the viscosities of the batter of the adhesion layer and of the top coat are measured to maintain consistency using a flow cup measuring device. That device is an open-topped vessel having an aperture in its base. When the viscosity of a batter is to be measured, the aperture is closed (usually by the operator placing a finger over it) and the vessel is filled with the batter until it overflows into an overflow trough around the top of the vessel The vessel is maintained level, and the aperture is opened, the time taken for the batter to flow out of the aperture being measured. The end of the flow can be determined either as the point at which the aperture is first visible from inside the cup or as the point at which constant flow desists. The size of the aperture is selected in accordance with the flow characteristics of the material to be measured. The temperature of the batter should also be maintained constant at this stage.

A coated food product is introduced into the fryer 5 at the inlet I being deposited on the front end 7a of the in-feed conveyor 7, the height of the front end 7a being such that the uppermost surface of the food product is above the level of oil O at the front end 7a. The food product travels on the in-feed conveyor 7 downwardly into the oil and its uppermost surface is submerged, the food product being carried beneath the embossing conveyor 9. The gap between the upper run of the in-feed conveyor 7 and the lower run of the embossing conveyor 9 is sufficient to allow the coated food product to pass through with a clearance of, for example, 10 to 20 mm. Once in the hot oil, the coated food product starts to release steam, and other gases (mainly carbon dioxide) are released as the leavening agent in the coating starts to react causing the food product to become buoyant. The food product then rises into contact with the embossing surface 13b provided by the slats 13 on the embossing conveyor 9. The angle of inclination of the in-feed conveyor 7 can be adjusted by varying the height of the roller 7a relative to the level of the oil O so that the uppermost surface of the coated food product is submerged in the oil for a period (the pre-embossing residence time) of only 2 to 3 seconds before it comes into contact with the embossing surface.

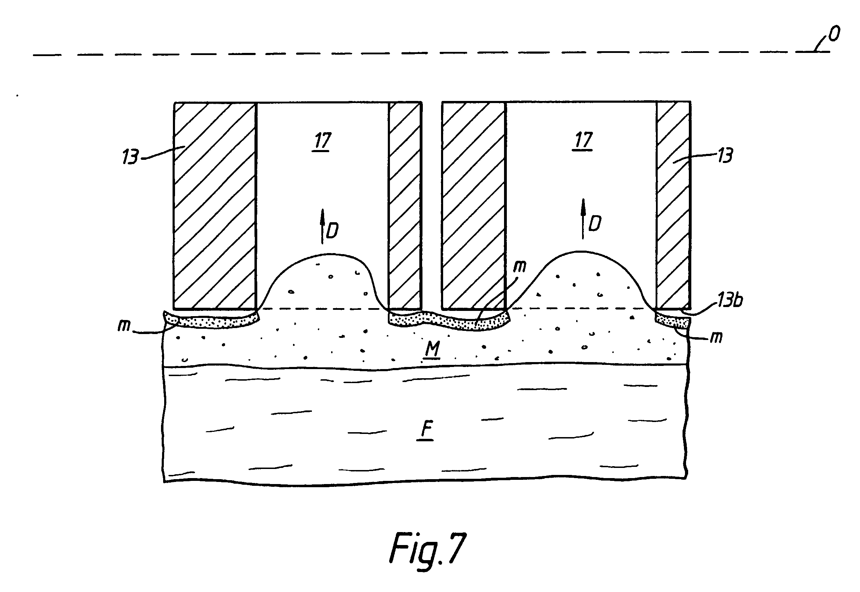

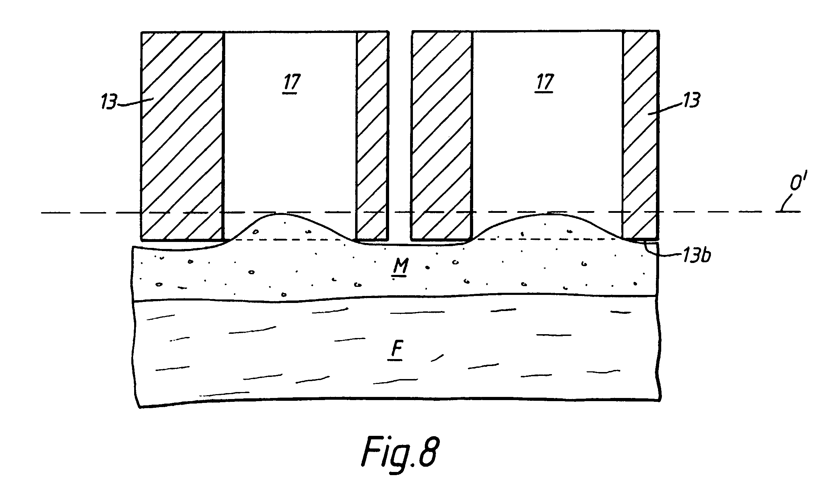

Once in contact with the embossing surface 13b, the coating material on the food product expands into the recesses 17, water vapour and other leavening gases escaping through the openings 19 in the recesses 17 and from there through the channels 18 in the backs ofthe slats 13 and the open-ended carriers 14 into the atmosphere. The leavening gases can also escape through the gaps G between the slats 13. Oil enters the interior of the recesses 17 by the same routes and promotes setting of at least the outer part of the coating in the embossed pattern. The degree of expansion into the recesses 17 is dependent on the proportion of leavening agent in the batter, the frying temperature (that is to say, the temperature of the oil), the frying time and also on the height of the level O of oil in the fryer 5, because the coating will not expand above the level of the oil. As can be seen in Fig. 7, when the level of the oil O is above the slats 13 and the uppermost part of the recesses 17, coating material M on a food product F can rise in the direction of the arrows D up the recesses to the full extent determined by the batter composition and the frying temperature so that a well-defined pattern of the recesses is clearly embossed on the coating. If the oil level is lower, however, as shown in Fig. 8, then the coating M can only expand to the level of the oil O' and only shallow embossing is achieved. With the arrangement of Fig. 7, however, care should be taken to avoid excessive expansion of the coating M above the open ends of the recesses 17 which might cause difficulties in the release of the food products F from the embossing surface 13b. Such excessive expansion can be avoided by controlling the proportion of leavening agent in the batter coating. The gap G between the slats 13 is not sufficient for there to be any significant expansion of the coating material M into those gaps.

As the embossing surface 13b is carried through the oil on the embossing conveyor 9, the food product is maintained in contact with and stationary relative to it under the action of its own buoyancy, while the coating material is expanding into the recesses 17 and the pattern is forming. The length of the path of the embossing conveyor 9 beneath the oil and its rate of travel are such that the food product is in contact with the embossing surface 13b for a period (the embossing residence time) within the range of from 15 to 30 seconds. At the end of the path, the coating is set sufficiently for the embossed pattern to be retained on the food products after they leave the embossing surface, and they then peel off the "non-stick" embossing surface 13b as the conveyor 9 turns upwardly and the slats 13 flex apart (see Fig. 4). As mentioned above, the recesses 17 may, if desired, be slightly tapered in a direction towards the channels 18 in the bases of the slats 13 in order further to ease release of the food products at this stage. The food products float up into contact with the lower run of the frying-out conveyor 10 at a slightly higher level than the lower run of the conveyor 9.

It will be seen from Fig. 7 that as a result of close contact between the coating material M on the food product F and the embossing surface 13b, some areas *m* of the coating may be shielded from the oil and not cooked to the same extent as those portions occupying the recesses 17, which are exposed to hot oil entering the recesses through the openings 19. These areas *m*, which may be of a paler colour than other more exposed areas, are now exposed to the oil as the food product comes into contact with the wire belt ofthe frying-out conveyor 10 and can become as set as the other parts of the batter-coating, and the food product can acquire a more uniform colour over its embossed surface.

The food products in contact with the frying-out conveyor 10 travel the remainder of their path through the fryer 5 for a period of from 15 to 30 seconds (the frying-out time).

The inclined portion 6b of the base conveyor 6 assists the coated food products to leave the fryer at the exit E. They can then be chilled or frozen and packaged, as required.

As an example of suitable lengths (measured horizontally) for the conveyors 9 and 10, the portion 9a may be 0.725m, the portion 9b 1.7m, the portion 10a 1.7m and the portion 10b 0.43 m.

The following Example illustrates the process of the invention:
Shaped cod portions of approximately 76g in weight were coated in batter in a three-stage process using standard equipment. In the first stage of that process, the cod portions were coated in an adhesion batter, the dry ingredients of which had the following composition:

| | %(w/w) |
|---|---|
| Wheatflour | 47.0 |
| Wheat Starch | 29.0 |
| Modified Starch | 19.0 |
| Salt | 3.1 |
| Pepper | 2.0 |

Water was added to the above mixture to give a batter having a viscosity represented by a flow time of 20 seconds through a flow cup of a volume of approximately 106cm³ having an aperture of 4.75mm in diameter and taking the end of the flow as being the point at which there was constant flow out of the aperture as described above. The cod portions coated in the adhesion batter had a yield of approximately 107%.

The cod portions were then crumbed using a mixture having the following composition:

| | % (w/w) |
|---|---|
| Breadcrumb | 89.3 |
| Flavouring | 5.0 |
| Wheatflour | 3.0 |
| Salt | 1.4 |
| Oil | 1.3 |

The crumbed portions had a yield of approximately 120%. They were then given a top coating of batter, the dry ingredients of which had the following composition:

| | %(w/w) |
|---|---|
| Wheatflour | 70.0 |
| Fat | 10.0 |
| Salt | 5.0 |
| Starch | 5.0 |
| Raising Agents | 3.5 |
| Skimmed Milk Powder | 2.5 |
| Flavouring | 2.0 |
| Dextrose | 1.0 |

The raising agents consisted of 1.48% by weight of sodium bicarbonate and 1.65% by weight of sodium acid pyrophosphate (SAPP) and 0.37% by weight of monocalcium phosphate (MCP). Water was added to the mixture to obtain a batter having a viscosity represented by a flow time of 25 seconds through a flow cup having a volume of approximately 106cm³ and an aperture of 7.00mm in diameter, taking the end of the flow as being the point at which there was constant flow through the aperture as described above. The cod portions with their top coat had a yield of approximately 172%.

The cod portions were then introduced onto the in-feed conveyor 7 of the fryer 5 as shown and described with reference to Figs. 2 to 6 with the frying oil at a temperature of from 205°C. The pre-embossing residence time was 2 seconds. The buoyant product was in contact with and stationary relative to the embossing surface 13b on the embossing conveyor 9 for 20 seconds prior to being transferred to the frying-out conveyor 10 where it spent a further 20 seconds before exiting the fryer. The food product was found to have a pattern embossed on its upper surface corresponding to the pattern of the recesses 17 in the embossing surface 13b, and to have a fairly uniform colour. Subsequent cooking of the coated food product in an oven resulted in a product which had a crisper coating on the upper surface as compared to a coated food product obtained using conventional equipment as shown and described with reference to Fig. 1.

## Claims

1. A process for preparing batter-coated food products, which comprises coating a food product in a batter containing leavening agent, introducing the coated food product into a fryer containing a frying medium, allowing the uppermost surface of the coated food product to come into contact with an embossing surface of submerger conveyor means, the embossing surface being so transported by the submerger conveyor means as to keep a food product in contact with it submerged in the frying medium, and the embossing surface having a pattern of recesses in it, the coating material of the food product expanding into the recesses of the embossing surface and the food product remaining in contact with and stationary relative to the embossing surface at least until the outermost surface of the coating has set sufficiently for the coating to retain an embossed pattern on removal from the embossing surface, and then allowing the coated food product to leave, or effecting removal of the coated food product from, the embossing surface.

2. A process as claimed in claim 1, wherein the period during which the surface of a coated food product that is to be embossed is submerged in the frying medium before it contact the embossing surface (the "pre-embossing residence time") is within the range of from 1.5 to 4 seconds and the temperature of the frying medium is within the range of from 190 to 230°C.

3. A process as claimed in claim 2, wherein the pre-embossing residence time is within the range of from 2 to 3 seconds.

4. A process as claimed in any one of claims 1 to 3, wherein the interiors of substantially all of the recesses in the embossing surface are in communication with the exterior to allow the escape of steam and/or other gases from the recesses when a food product is in contact with surrounding portions of the embossing surface during frying.

5. A process as claimed in claim 4, wherein the embossing surface of the submerger conveyor means is provided by a flexible belt and at least some of the recesses penetrate the belt and are directly open to the exterior.

6. A process as claimed in claim 5, wherein the flexible belt comprises a series of slats, each of which extends transversely to the direction of travel of the belt, the slats being provided with the recesses and providing the embossing surface.

7. A process as claimed in claim 6, wherein the slats are arranged adjacent to, but spaced apart from, each other and at least some of the recesses extend over at least two slats so that gaps between adjacent slats provide vents for the escape of steam or other gases from the interior of the recesses to the exterior.

8. A process as claimed in claim 7, wherein the distance between adjoining slats is 3mm or less, preferably 1 to 2mm.

9. A process as claimed in any one of claims 1 to 8, wherein assuming the area of the embossing surface not occupied by the recesses is all in the same plane, then the ratio of the area occupied by the recesses in that plane to the non-recessed area is advantageously within the range of from 0.40 to 3.0, preferably, 1.20 to 1.85.

10. A process as claimed in any one of claims 1 to 9, wherein at least some of the recesses are elongate with rounded ends .

11. A process as claimed in claim 10, wherein the width of each of the recesses is at least 4mm, and is preferably within the range of from 6 to 15mm, especially 10 to 11mm.

12. A process as claimed in any one of claims 1 to 11, wherein the depth of each recess is within the range of from 5 to 25mm, preferably, 9 to 15mm.

13. A process as claimed in any one of claims 1 to 12, wherein the walls of each recess are inclined to the perpendicular to the surrounding unrecessed portions of the embossing surface by an angle within the range of from 2.5° to 10°, preferably, aproximately 5°, so that each recess tapers in a direction away from the surrounding unrecessed portions of the embossing surface.

14. A process as claimed in any one of claims 1 to 13, wherein the edges between the walls of the recesses and unrecessed portions of the embossing surface are bevelled.

15. A process as claimed in any one of claims 1 to 14, wherein the embossing surface is a release surface made from a "non-stick" material.

16. A process as claimed in any one of claims 1 to 15, wherein the proportion of leavening agent in the coating material is within the range of from 1.7 to 6.0%, preferably, 2.8 to 4.8%, the percentages being by weight based on the weight of the dry ingredients excluding added water but not excluding the moisture content of other ingredients.

17. A process as claimed in any one of claims 1 to 16, wherein the leavening agent comprises sodium bicarbonate, and an acidic component comprising sodium acid pyrophosphate (SAPP).

18. A process as claimed in claim 17, wherein the acidic component also comprises monocalcium phosphate (MCP).

19. A process as claimed in claim 17 or claim 18, wherein the amount of sodium bicarbonate in the coating material is within the range of from 0.75 to 2.5%, preferably, 1.2 to 2.0%, and the amount of the acidic component is within the range of from 0.95 to 3.5%, preferably, 1.6 to 2.8%, the percentages being by weight and based on the weight of the dry ingredients excluding added water but not excluding the moisture content of other ingredients.

20. A process as claimed in any one of claims 1 to 19, wherein the level of the frying medium in the fryer relative to the submerger conveyor means is such that the surface of the frying medium is immediately above the uppermost part of the recesses of the embossing surface on the portion of the path of the submerger conveyor means on which the food product is in contact with the embossing surface.

21. A process as claimed in any one of claims 1 to 20, wherein the food product is conveyed in contct with the embossing surface along only a portion of the path of the submerger conveyor means through the frying medium, and the food product is free of that surface for the remain er of its passage through the fryer.

22. A process as claimed in claim 21, wherein the submerger conveyor means comprises an embossing conveyor having the embossing surface and a frying-out conveyor which maintains a food product submerged in the frying medium after it has left the embossing surface.

23. A process as claimed in claim 22, wherein the frying-out conveyor is provided with a wire belt for contacting the food products.

24. A process as claimed in any one of claims 21 to 23, wherein the food product is in contact with the embossing surface for a time within the range of from 10 to 50 seconds, preferably, 15 to 30 seconds.

25. A process as claimed in any one of claims 22 to 24, wherein the food product is in contact with the frying-out conveyor for a period within the range of from 10 to 50 seconds, preferably, 15 to 30 seconds.

26. A process as claimed in any one of claims 21 to 25, wherein the total frying time is within the range of from 21.5 to 104 seconds, preferably, 32 to 63 seconds.

27. A process as claimed in any one of claims 22 to 26, wherein the frying-out conveyor runs at the same rate as the embossing conveyor.

28. A process as claimed in any one of claims 22 to 27, wherein the lower run of the frying-out conveyor is at a higher level than the embossing surface as it reaches the end of its lower run.

29. A process as claimed in any one of claims 1 to 28, wherein the food products are coated in an adhesion layer of batter, a layer of crumbs and then a top coat of the batter containing the leavening agent.

30. A process as claimed in claim 29, wherein the yield (that is to say, the weight of the coated food product divided by the weight of the uncoated food product and expressed as a percentage) of the food product after application of the adhesion layer is within the range of from 103 to 115%, preferably, 105 to 109%, the yield of the food product after the application of the crumb layer is within the range of from 117 to 135%, preferably, 120 to 128%, and the yield of the food product after the application of the final top coat of batter containing a leavening agent and before frying is within the range of from 160 to 180%, preferably, 163 to 175%.

31. A process as claimed in any one of claims 1 to 30, wherein the food product is fish or chicken.

32. Apparatus for imparting an embossed pattern to food products coated in a batter containing leavening agent, which comprises a fryer having submerger conveyor means provided with an embossing surface, the submerger conveyor means being arranged, in use, so to transport the embossing surface as to keep a food product with its uppermost surface in contact with the embossing surface submerged in frying medium in the fryer, the embossing surface having a pattern of recesses in it into which coating material on a food product in contact with the embossing surface can expand, each recess being of a depth within the range of from 5 to 25mm, and the arrangement being such that, in use, a food product can remain in contact with and stationary relative to the embossing surface at least until the outermost surface of the coating has set sufficiently for the coating to retain an embossed pattern on removal from the embossing surface.

33. Apparatus as claimed in claim 32 for carrying out the process as claimed in any one of claims 1 to 31 herein.

34. A leavened-batter-coated food product having an embossed pattern on its uppermost surface obtainable by a process as claimed in any one of claims 1 to 31.

35. A leavened-batter-coated food product having an embossed pattern on its uppermost surface obtainable with apparatus as claimed in any one of claims 32 and 33.

## Patentansprüche

1. Ein Verfahren zur Herstellung von mit Teig beschichteten Lebensmittelprodukten, umfassend das Beschichten eines Lebensmittelproduktes in einem Teig beinhaltend ein Treibmittel, das Einbringen des beschichteten Lebensmittelproduktes in eine Frittiervorrichtung beinhaltend ein Frittiermedium, es der obersten Oberfläche des beschichteten Lebensmittelproduktes zu ermöglichen, mit einer Prägeroberfläche eines Eintauchfördermittels in Kontakt zu treten, wobei die Prägeoberfläche des Eintauchfördermittels dergestalt transportiert wird, dass ein in dem Frittiermedium eingetauchtes Lebensmittelprodukt mit ihr in Kontakt bleibt und wobei die Prägeroberfläche ein Muster von Vertiefungen in ihr aufweist, wobei sich das Beschichtungsmaterial des Lebensmittelproduktes in die Vertiefungen der Prägeroberfläche erstreckt und wobei das Lebensmittelprodukt in Kontakt mit der Prägeroberfläche und relativ zu dieser stationär bleibt, bis die äußerste Oberfläche der Beschichtung sich ausreichend gesetzt hat, damit die Beschichtung nach der Entfernung von der Prägeroberfläche ein geprägtes Muster behält, und es dann dem beschichteten Lebensmittelprodukt zu ermöglichen, die Prägeroberfläche zu verlassen oder die Entfernung des beschichteten Lebensmittelproduktes von der Prägeoberfläche zu bewirken.

2. Ein Verfahren nach Anspruch 1, wobei der Zeitraum, während dem die Oberfläche des beschichteten Lebensmittelproduktes, die geprägt werden soll, im Frittiermedium eingetaucht ist, bevor sie in Kontakt mit der Prägeoberfläche tritt (die "Vorpräge-Verweilzeit"), im Bereich von 1,5 bis 4 Sekunden und die Temperatur des Frittiermediums im Bereich von 190 bis 230°C liegt.

3. Ein Verfahren nach Anspruch 2, wobei die Vorpräge-Verweilzeit in einem Bereich von 2 bis 3 Sekunden liegt.

4. Ein Verfahren nach irgendeinem der Ansprüche 1 bis 3, wobei die Innenräume von im Wesentlichen allen Vertiefungen in der Prägeoberfläche in Verbindung mit dem Außenraum sind, um das Entweichen von Dampf und/oder anderen Gasen aus den Vertiefungen zu ermöglichen, wenn ein Lebensmittelprodukt in Kontakt mit den umgebenden Teilen der Prägeoberfläche während des Frittierens tritt.

5. Ein Verfahren nach Anspruch 4, wobei die Prägeroberfläche des Eintauchfördermittels durch ein flexibles Band bereitgestellt wird und zumindest einige der Vertiefungen in das Band eindringen und direkt zum Außenraum hin geöffnet sind.

6. Ein Verfahren nach Anspruch 5, wobei das flexible Band eine Reihe von Lamellen umfasst, von denen sich jede transversal zur Bewegungsrichtung des Bandes erstreckt, wobei die Lamellen mit den Vertiefungen bereitgestellt werden und die Prägeoberfläche bereitstellen.

7. Ein Verfahren nach Anspruch 6, wobei die Lamellen benachbart zueinander, jedoch beabstandet voneinander angeordnet sind und wobei sich zumindest einige der Vertiefungen sich über zumindest zwei Lamellen erstrecken, so dass Lücken zwischen benachbarten Lamellen Abzugsschächte für das Entweichen von Dampf oder anderen Gasen aus dem Innenraum der Vertiefungen in den Außenraum bereitstellen.

8. Ein Verfahren nach Anspruch 7, wobei der Abstand zwischen angrenzenden Lamellen 3 mm oder weniger, vorzugsweise 1 bis 2 mm beträgt.

9. Ein Verfahren nach irgendeinem der Ansprüche 1 bis 8, wobei unter der Annahme, dass die Fläche der Prägeroberfläche, welche nicht durch die Vertiefungen belegt ist, sich in der gleichen Ebene befindet, das Verhältnis der Fläche, welche durch die Vertiefungen belegt ist, zur nicht-vertieften Fläche in dieser Ebene vorteilhafter Weise im Bereich von 0,4 bis 3,0, vorzugsweise von 1,2 bis 1,85 liegt.

10. Ein Verfahren nach irgendeinem der Ansprüche 1 bis 9, wobei zumindest einige der Vertiefungen mit abgerundeten Endungen verlängert sind.

11. Ein Verfahren nach Anspruch 10, wobei die Breite einer jeden Vertiefung mindestens 4 mm beträgt und vorzugsweise im Bereich von 6 bis 15 mm, beispielsweise von 10 bis 11 mm liegt.

12. Ein Verfahren nach irgendeinem der Ansprüche 1 bis 11, wobei die Tiefe einer jeden Vertiefung im Bereich von 5 bis 25 mm, vorzugsweise von 9 bis 15 mm liegt.

13. Ein Verfahren nach irgendeinem der Ansprüche 1 bis 12, wobei die Wandungen einer jeden Vertiefung gegenüber der Senkrechte der umgebenden, nicht vertieften Teile der Prägeroberfläche durch einen Winkel im Bereich von 2,5° bis 10°, vorzugsweise etwa 5° geneigt sind, so dass sich jede Vertiefung weg von den umgebenden, nicht vertieften Teilen der Prägeoberfläche verjüngt.

14. Ein Verfahren nach irgendeinem der Ansprüche 1 bis 13, wobei die Kanten zwischen den Wandungen der Vertiefungen und den nicht vertieften Teilen der Prägeoberfläche stumpfwinklig sind.

15. Ein Verfahren nach irgendeinem der Ansprüche 1 bis 14, wobei die Prägeoberfläche eine aus einem "nicht klebenden" Material hergestellte Ablöseoberfläche ist.

16. Ein Verfahren nach einem der Ansprüche 1 bis 15, wobei der Anteil des Treibmittels im Beschichtungsmaterial in einem Bereich von 1,7 bis 6,0 %, vorzugsweise 2,8 bis 4,8 % liegt, wobei die Prozentangaben das Gewicht bezogen auf das Gewicht der trockenen Inhaltsstoffe unter Ausschluss des zugesetzten Wassers aber nicht unter Ausschluss des Feuchtigkeitsgehaltes anderer Inhaltsstoffe darstellen.

17. Ein Verfahren nach irgendeinem der Ansprüche 1 bis 16, wobei das Treibmittel Natriumbicarbonat und eine saure Komponente umfassend saures Natriumpyrophosphat (SAPP) umfasst.

18. Ein Verfahren nach Anspruch 17, wobei die sauere Komponente auch Monokalziumphosphat (MCP) umfasst.

19. Ein Verfahren nach Anspruch 17 oder Anspruch 18, wobei die Menge an Natriumbicarbonat im Beschichtungsmaterial im Bereich von 0,75 bis 2,5 %, vorzugsweise von 1,2 bis 2,0 % und die Menge der sauren Komponente im Bereich von 0,95 bis 3,5 %, vorzugsweise 1,6 bis 2,8 % liegt, wobei die Prozentangaben das Gewicht bezogen auf das Gewicht der trockenen Inhaltsstoffe unter Ausschluss des zugesetzten Wassers aber nicht unter Ausschluss des Feuchtigkeitsgehaltes anderer Inhaltsstoffe darstellen.

20. Ein Verfahren nach irgendeinem der Ansprüche 1 bis 19, wobei die Höhe des Frittiermediums in der Frittiervorrichtung relativ zum Eintauchfördermittel so gewählt ist, dass die Oberfläche des Frittiermediums unmittelbar über dem höchsten Teil der Vertiefungen der Prägeoberfläche auf dem Teil der Bahn des Eintauchfördermittels liegt, auf dem sich das Lebensmittelprodukt in Kontakt mit der Prägeoberfläche befindet.

21. Ein Verfahren nach irgendeinem der Ansprüche 1 bis 20, wobei das Lebensmittelprodukt nur entlang eines Teils der Bahn des Eintauchfördermittels durch das Frittiermedium in Kontakt mit der Prägeoberfläche gefördert wird und wobei das Lebensmittelprodukt für den Rest der Passage durch das Frittiermedium losgelöst von dieser Oberfläche ist.

22. Ein Verfahren nach Anspruch 21, wobei das Eintauchfördermittel einen Prägeförderer, welcher eine Prägeroberfläche aufweist, und einen Ausfrittierförderer, welcher ein Lebensmittelprodukt im Frittiermedium eingetaucht behält, nachdem es die Prägeroberfläche verlassen hat, umfasst.

23. Ein Verfahren nach Anspruch 22, wobei der Ausfrittierförderer mit einem Drahtgewebe-Band zum in Kontakt treten mit dem Lebensmittelprodukt bereitgestellt wird.

24. Ein Verfahren nach irgendeinem der Ansprüche 21 bis 23, wobei sich das Lebensmittelprodukt für eine Zeit im Bereich von 10 bis 50 Sekunden, vorzugsweise von 15 bis 30 Sekunden in Kontakt mit der Prägeoberfläche befindet.

25. Ein Verfahren nach irgendeinem der Ansprüche 22 bis 24, wobei sich das Lebensmittelprodukt für eine Zeit im Bereich von 10 bis 50 Sekunden, vorzugsweise von 15 bis 30 Sekunden in Kontakt mit dem Ausfrittierförderer befindet.

26. Ein Verfahren nach irgendeinem der Ansprüche 21 bis 25, wobei die Gesamtfrittierzeit im Bereich von 21,5 bis 104 Sekunden, vorzugsweise 32 bis 63 Sekunden liegt.

27. Verfahren nach irgendeinem der Ansprüche 22 bis 26, wobei der Ausfrittierförderer zur gleichen Zeit läuft wie der Prägeförderer.

28. Ein Verfahren nach irgendeinem der Ansprüche 22 bis 27, wobei der niedrigere Lauf des Ausfrittierförderers sich in einer höheren Ebene als die Prägeroberfläche befindet, wenn er das Ende seines niedrigeren Laufes erreicht.

29. Ein Verfahren nach irgendeinem der Ansprüche 1 bis 28, wobei die Lebensmittelprodukte in einer Adhäsionsschicht aus Teig, in einer Schicht aus Krumen und dann mit einer Oberschicht aus dem Teig beinhaltend das Treibmittel beschichtet werden.

30. Das Verfahren nach Anspruch 29, wobei die Ausbeute (das ist das Gewicht des beschichteten Lebensmittelproduktes dividiert durch das Gewicht des unbeschichteten Lebensmittelproduktes und ausgedrückt in Prozent) des Lebensmittelproduktes nach dem Auftragen der Adhäsionsschicht im Bereich von 103 bis 115 %, vorzugsweise von 105 bis 109 % liegt, die Ausbeute des Lebensmittelproduktes nach dem Auftragen der Krumenschicht im Bereich von 117 bis 135 %, vorzugsweise von 120 bis 128 % liegt und die Ausbeute des Lebensmittelproduktes nach dem Auftragen der finalen Oberschicht aus Teig beinhaltend das Treibmittel und vor dem Frittieren im Bereich von 160 bis 180 %, vorzugsweise von 163 bis 175 % liegt.

31. Ein Verfahren nach irgendeinem der Ansprüche 1 bis 30, wobei das Lebensmittelprodukt Fisch oder Huhn ist.

32. Vorrichtung, um einem Lebensmittelprodukt, welches mit einem Teig beinhaltend ein Treibmittel beschichtet ist, eine Prägemuster zu verleihen, umfassend eine Frittiervorrichtung, welche ein mit einer Prägeoberfläche versehene Eintauchfördermittel aufweist, wobei das Eintauchfördermittel im Gebrauch so angeordnet ist, dass die Prägeoberfläche transportiert wird, um ein Lebensmittelprodukt, welches mit seiner obersten Oberfläche sich in Kontakt mit der Prägeoberfläche befindet, eingetaucht in einem Frittiermedium in der Frittiervorrichtung zu halten, wobei die Prägeoberfläche ein Muster aus Vertiefungen in sich aufweist, in welche sich Beschichtungsmaterial auf einem Lebensmittelprodukt, welches sich in Kontakt mit der Prägeoberfläche befindet, ausweiten kann, wobei jede Vertiefung eine Tiefe im Bereich von 5 bis 25 mm aufweist, und wobei die Anordnung dergestalt ist, dass im Gebrauch ein Lebensmittelprodukt zumindest solange in Kontakt der Prägeoberfläche und relativ zu dieser stationär bleibt, bis sich die äußerste Oberfläche der Beschichtung ausreichend gesetzt hat, damit die Beschichtung nach der Entfernung von der Prägeroberfläche ein geprägtes Muster behält.

33. Vorrichtung nach Anspruch 32 zur Durchführung des Verfahrens nach irgendeinem der Ansprüche 1 bis 31.

34. Ein mit aufgetriebenem Teig beschichtetes Lebensmittelprodukt, welches ein Prägemuster auf seiner obersten Oberfläche aufweist, erhältlich mittels eines Verfahrens nach irgendeinem der Ansprüche 1 bis 31.

35. Ein mit aufgetriebenem Teig beschichtetes Lebensmittelprodukt, welches ein Prägemuster auf seiner obersten Oberfläche aufweist, erhältlich mittels einer Vorrichtung nach irgendeinem der Ansprüche 32 und 33.

## Revendications

1. Procédé pour préparer des produits alimentaires enrobés de pâte à frire, consistant à enrober un produit alimentaire dans une pâte à frire contenant un agent de levure, introduire le produit alimentaire enrobé dans une friteuse contenant un milieu de friture, laisser la surface la plus supérieure du produit alimentaire enrobé venir en contact avec une surface de gaufrage du moyen formant convoyeur immergé, la surface de gaufrage étant transportée par le moyen convoyeur immergé de façon telle qu'un produit alimentaire reste en contact avec celui-ci immergé dans le milieu de friture, et la surface de gaufrage comportant à l'intérieur une structure d'évidements, le matériau d'enrobage du produit alimentaire se répandant dans les évidements de la surface de gaufrage et le produit alimentaire restant en contact avec et fixe par rapport à la surface de gaufrage au moins jusqu'à ce la surface le plus à l'extérieur de l'enrobage ait suffisamment durci pour que l'enrobage conserve un motif structuré lorsqu'il est retiré de la surface de gaufrage, puis laisser le produit alimentaire enrobé quitter la surface de gaufrage ou retirer le produit alimentaire enrobé de la surface de gaufrage.

2. Procédé selon la revendication 1, dans lequel la période durant laquelle la surface d'un produit alimentaire enrobé devant être structurée est immergée dans le milieu de friture avant de venir en contact avec la surface de gaufrage (« temps de séjour avant gaufrage») est dans le domaine de 1,5 à 4 secondes et la température de l'agent de friture est dans le domaine de 190 à 230°C.

3. Procédé selon la revendication 2 dans lequel le temps de séjour avant gaufrage est dans le domaine de 2 à 3 secondes.

4. Procédé selon l'une quelconque des revendications 1 à 3, dans lequel les intérieurs de pratiquement tous les évidements ménagés dans la surface de gaufrage communiquent avec l'extérieur afin de laisser s'échapper la vapeur et/ou autres gaz des évidements lorsqu'un produit alimentaire est en contact avec des parties environnantes de la surface de gaufrage au cours de la friture.

5. Procédé selon la revendication 4 dans lequel la surface de gaufrage du moyen convoyeur immergé est formée par une courroie flexible et au moins certains des évidements pénètrent dans la courroie et sont directement ouverts vers l'extérieur.

6. Procédé selon la revendication 5 dans lequel la courroie flexible comprend une série de lattes, chacune d'elle s'étendant transversalement à la direction de déplacement de la courroie, les lattes étant munies des évidements et assurant la surface de gaufrage.

7. Procédé selon la revendication 6 dans lequel les lattes sont disposées adjacentes mais espacées les unes des autres, et au moins certains des évidements s'étendent sur au moins deux lattes de sorte que des intervalles entre lattes adjacentes fournissent des évents pour libérer la vapeur ou d'autres gaz depuis l'intérieur des évidements vers l'extérieur.

8. Procédé selon la revendication 7 dans lequel la distance entre des lattes adjacentes est de 3 mm ou moins, de préférence 1 à 2 mm.

9. Procédé selon l'une quelconque des revendications 1 à 8, dans lequel, en supposant que toute la région de la surface de gaufrage non occupée par les évidements soit située sur le même plan, alors le rapport de la région occupée par les évidements dans ce plan et de la région non évidée se situe avantageusement dans la plage de 0,40 à 3,0, de préférence 1,20 à 1,85.

10. Procédé selon l'une quelconque des revendications 1 à 9, dans lequel au moins certains des évidements sont de forme allongée et munis d'extrémités arrondies.

11. Procédé selon la revendication 10 dans lequel la largeur de chacun des évidements est d'au moins 4 mm et, de préférence, dans la plage de 6 à 15 mm, en particulier 10 à 11 mm.

12. Procédé selon l'une quelconque des revendications 1 à 11, dans lequel la profondeur de chaque évidement est dans la plage de 5 à 25 mm, de préférence 9 à 15 mm.

13. Procédé selon l'une quelconque des revendications 1 à 12, dans lequel les parois de chaque évidement sont inclinées, par rapport à la perpendiculaire aux parties environnantes non évidées de la surface de gaufrage, d'un angle dans le domaine de 2,5° à 10°, de préférence environ 5°, de telle façon que chaque évidement s'effile dans une direction opposée aux parties environnantes non évidées de la surface de gaufrage.

14. Procédé selon l'une quelconque des revendications 1 à 13, dans lequel les bords entre les parois des évidements et des parties non évidées de la surface de gaufrage sont chanfreinés.

15. Procédé selon l'une quelconque des revendications 1 à 14, dans lequel la surface de gaufrage est une surface non adhérente en matériau anti-adhésif.

16. Procédé selon l'une quelconque des revendications 1 à 15, dans lequel la proportion d'agent de levure dans le matériau d'enrobage est dans le domaine de 1,7 à 6,0 %, de préférence de 2,8 à 4,8 %, les pourcentages étant en poids basé sur le poids des ingrédients secs, excluant l'eau ajoutée mais incluant la teneur en humidité des autres ingrédients.

17. Procédé selon l'une quelconque des revendications 1 à 16, dans lequel l'agent de levure contient du bicarbonate de sodium et un composant acidifiant contenant du pyrophosphate acide de sodium (SAPP).

18. Procédé selon la revendication 17 dans lequel le composant contient également du phosphate monocalcique (MCP).

19. Procédé selon la revendication 17 ou la revendication 18, dans lequel la quantité de bicarbonate de sodium dans le matériau d'enrobage est dans le domaine de 0,75 à 2,5%, de préférence de 1,2 à 2,0 % et la quantité du composant acide est dans le domaine de 0,95 à 3,5 %, de préférence de 1,6 à 2,8 %, les pourcentages étant en poids et basés sur le poids des ingrédients secs excluant l'eau ajoutée mais incluant la teneur en humidité des autres ingrédients.

20. Procédé selon l'une quelconque des revendications 1 à 19, dans lequel le niveau du milieu de friture dans la friteuse par rapport au moyen formant convoyeur immergé est tel que la surface du milieu de friture est située immédiatement au-dessus de la partie supérieure la plus supérieure des évidements de la surface de gaufrage sur la partie de trajectoire du moyen formant convoyeur immergé sur laquelle le produit alimentaire est en contact avec la surface de gaufrage.

21. Procédé selon l'une quelconque des revendications 1 à 20, dans lequel le produit alimentaire est transporté en contact avec la surface de gaufrage uniquement le long d'une partie de trajectoire du moyen formant convoyeur immergé à travers le milieu de friture, et le produit alimentaire est libéré de cette surface sur le reste de son parcours à travers la friteuse.

22. Procédé selon la revendication 21 dans lequel le moyen formant convoyeur immergé comprend un convoyeur à gaufrer muni de la surface de gaufrage et un convoyeur de sortie de friture qui maintient un produit alimentaire immergé dans le milieu de friture après qu'il ait quitté la surface de gaufrage.

23. Procédé selon la revendication 22 dans lequel le convoyeur de sortie de friture est équipé d'une courroie en fil métallique pour venir au contact des produits alimentaires.

24. Procédé selon l'une quelconque des revendications 21 à 23, dans lequel le produit alimentaire est en contact avec la surface de gaufrage pendant une durée dans le domaine de 10 à 50 secondes, de préférence 15 à 30 secondes.

25. Procédé selon l'une quelconque des revendications 22 à 24, dans lequel le produit alimentaire est en contact avec le convoyeur de sortie de friture pendant une durée dans le domaine de 10 à 50 secondes, de préférence 15 à 30 secondes.

26. Procédé selon l'une quelconque des revendications 1 à 25, dans lequel le temps de friture est dans le domaine de 21,5 à 104 secondes, de préférence de 32 à 63 secondes.

27. Procédé selon l'une quelconque des revendications 22 à 26, dans lequel le convoyeur de sortie de friture se déplace à la même vitesse que le convoyeur à gaufrer.

28. Procédé selon l'une quelconque des revendications 22 à 27, dans lequel la course inférieure du convoyeur de sortie de friture est situé à un niveau plus élevé que la surface de gaufrage lorsqu'il atteint l'extrémité de sa course inférieure.

29. Procédé selon l'une quelconque des revendications 1 à 28, dans lequel les produits alimentaires sont enrobés dans une couche adhérente de pâte à frire, une couche de chapelure, puis une couche supérieure de pâte à frire contenant l'agent de levure.

30. Procédé selon la revendication 29 dans lequel le rendement (c'est-à-dire le poids du produit alimentaire enrobé divisé par le poids du produit alimentaire non enrobé et exprimé en pourcentage) du produit alimentaire après application de la couche adhérente est dans le domaine de 103 à 115 %, de préférence, de 105 à109%, le rendement du produit alimentaire après l'application de la couche de chapelure est dans le domaine de 117 à 135%, de préférence de 120 à 128%, et le rendement du produit alimentaire après l'application de la couche finale supérieure de pâte à frire contenant un agent de levure et avant friture est dans le domaine de 160 à 175 %., de préférence, de 163 à 175 %.

31. Procédé selon l'une quelconque des revendications 1 à 30, dans lequel le produit alimentaire est du poisson ou du poulet.

32. Appareil destiné à appliquer un motif structuré sur des produits alimentaires enrobés dans une pâte à frire contenant un agent de levure, qui comprend une friteuse équipée d'un moyen formant convoyeur immergé muni d'une surface de gaufrage, le moyen formant convoyeur immergé étant agencé en utilisation, de manière à transporter la surface de gaufrage de façon telle qu'un produit alimentaire, sur sa surface la plus supérieure, reste en contact avec la surface de gaufrage immergée dans le milieu de friture à l'intérieur de la friteuse, la surface de gaufrage présentant une structure d'évidements dans lesquels le matériau d'enrobage présent sur un produit alimentaire en contact avec la surface de gaufrage peut se répandre, chaque évidement ayant une profondeur dans le domaine de 5 à 25 mm, et l'agencement étant tel qu'en utilisation, un produit alimentaire peut rester en contact avec et fixe par rapport à la surface de gaufrage au moins jusqu'à ce la surface le plus à l'extérieur de l'enrobage ait suffisamment durci pour que l'enrobage conserve un motif structuré lorsqu'il est retiré de la surface de gaufrage.

33. Appareil selon la revendication 32 pour réaliser le procédé selon l'une quelconque des revendications 1 à 31.

34. Produit alimentaire enrobé de pâte à frire levante présentant un motif structuré sur sa surface la plus supérieure pouvant être obtenu par un procédé selon l'une quelconque des revendications 1 à 31.

35. Produit alimentaire enrobé de pâte à frire levante présentant un motif structuré sur sa surface la plus supérieure pouvant être obtenu au moyen de l'appareil selon l'une quelconque des revendications 32 et 33.
